# EUROPEAN PATENT APPLICATION

(11) **EP 2 661 094 A1**
(43) Date of publication of application: **06.11.2013**
(21) Application number: 10861272.2
(22) Date of filing: 28.12.2010
(51) Int. Cl.: H04Q 9/04

(54) **DISPLAY INTEGRATED CONTROL SYSTEMS AND DISPLAY INTEGRATED INPUT DEVICE**

(71) Applicant: Volvo Construction Equipment AB, 631 85 Eskilstuna (SE)
(72) Inventor: KIM, Young-Don, Changwon-si Gyeongsangnam-do 642-370 (KR)
(74) Representative: Zimmermann, Tankred Klaus
(86) International application number: PCT/KR2010/009401
(87) International publication number: WO 2012/091191

(57) **Abstract**

An integrated display control system is provided, which includes a plurality of display devices, and an integrated display input device selecting one of the display devices to be operated through device identification codes that respectively correspond to specific key signals input in accordance with user's key operation and controlling the operation (or function) of the selected display device through common control commands that respectively correspond to the user input key signals. Since the plurality of display devices can be individually and integratedly controlled using one input device, the manufacturing cost can be saved, and the space of an operator's seat can be secured.

## Description

### TECHNICAL FIELD

The present invention relates to an integrated display control system and an integrated display input device. More particularly, the present invention relates to an integrated display control system and an integrated display input device, which can individually and integratedly control a plurality of display devices through one input device by selecting and designating one of the display devices to be operated using device identification codes that respectively correspond to specific key signals input in accordance with user's key operation, and controlling specific operation (or function) of the display device selected and designated using common control commands that respectively correspond to the user input key signals.

### BACKGROUND ART

According to the current tendencies, as the number of display devices mounted on one machine has been increasing, the number of input devices for controlling respective display screens has also been increasing. Since such input devices for controlling the plurality of display devices are installed in a narrow operator's seat, they may disturb operator's work to cause problems.

### DISCLOSURE

### TECHNICAL PROBLEM

Therefore, the present invention has been made to solve the above-mentioned problems occurring in the related art, and one subject to be achieved by the present invention is to provide an integrated display control system and an integrated display input device, which can control a plurality of display devices through one input device and thus can secure a space of an operator's seat.

### TECHNICAL SOLUTION

In accordance with one aspect of the present invention, there is provided an integrated display control system, which includes a plurality of display devices; and an integrated display input device selecting one of the display devices to be operated through device identification codes that respectively correspond to specific key signals input in accordance with user's key operation and controlling the operation (or function) of the selected display device through common control commands that respectively correspond to the user input key signals.

The integrated display input device may include a key input unit; a memory mapping and storing the device identification codes that correspond to the specific key signals for the plurality of display devices, and mapping and storing the common control commands for the different specific key signals; a device identification control unit reading the device identification code that corresponds to the input specific key signal from the memory when the specific key signal is input from the key input unit, and selecting and designating one of the display devices to be operated; a device operation control unit controlling the specific operation (or function) of the display device selected and designated through reading the common control command that corresponds to the specific key signal input through the key input unit from the memory; and a communication module transmitting the read device identification code and the common control command to the plurality of display devices connected thereto by wire or wirelessly.

Each of the plurality of display devices may further include means for allowing the display device having a corresponding function to acquire a control right prior to the integrated display input device when a predetermined communication message or a specific function is operated,

In accordance with another aspect of the present invention, there is provided an integrated display input device, which includes a key input unit; a memory mapping and storing device identification codes that correspond to specific key signals for a plurality of display devices, and mapping and storing common control commands for the different specific key signals; a device identification control unit reading the device identification code that corresponds to the input specific key signal from the memory when the specific key signal is input from the key input unit, and selecting and designating one of the display devices to be operated; a device operation control unit controlling the specific operation (or function) of the display device selected and designated through reading the common control command that corresponds to the specific key signal input through the key input unit from the memory; and a communication module transmitting the read device identification code and the common control command to the plurality of display devices connected thereto by wire or wirelessly.

### ADVANTAGEOUS EFFECT

According to the present invention, the plurality of display devices can be individually and integratedly controlled through one input device by selecting and designating one of the display devices to be operated using the device identification codes that respectively correspond to the specific key signals input in accordance with the user's key operation, and controlling the specific operation (or function) of the display device selected and designated using the common control commands that respectively correspond to the user input key signals. Since one input device is used, the manufacturing cost can be saved, and the space of the operator's seat can be secured.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a view illustrating an integrated display control system according to the present invention;
Fig. 2 is a block diagram illustrating an integrated display input device according to the present invention;
Fig. 3 is an exemplary view of an integrated display input device according to the present invention; and
Figs. 4A and 4B are views illustrating another example of the integrated display control system according to the present invention.
* Description of Reference Numerals in the Drawing
100: integrated display input device
201-1 to 201-4: display device
101: key input unit
102: memory
103: device identification control unit
104: device operation control unit
105: communication module

### BEST MODE

Hereinafter, preferred embodiments of the present invention will be described in detail with reference to the accompanying drawings.

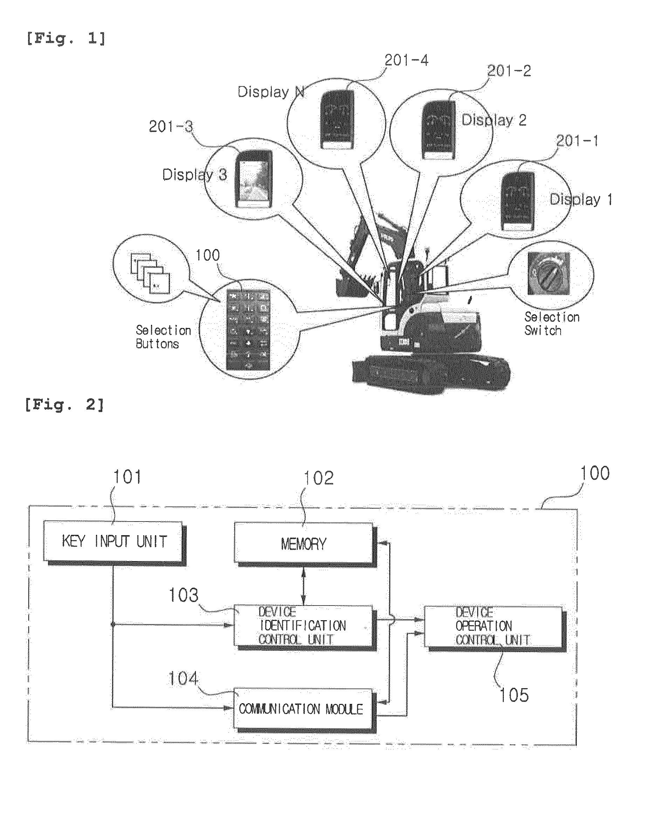

Fig. 1 is a view illustrating an integrated display control system according to the present invention.

As illustrated in Fig. 1, the integrated display control system according to the present invention is configured to include a plurality of display devices 201-1 to 201-4; and an integrated display input device 100 selecting one of the display devices to be operated through device identification codes that respectively correspond to specific key signals input in accordance with user's key operation and controlling the operation (or function) of the selected display device through common control commands that respectively correspond to the user input key signals.

Here, the integrated display input device 100 is composed of, for example, one keypad, and is connected to the plurality of display devices 201-1 to 201-4 by wire or wirelessly to individually and integratedly control the plurality of display devices 201-1 to 201-4. The integrated display input device 100 selects one of the display devices to be operated through the device identification code that corresponds to the specific key signal input in accordance with the user's key operation and controls the operation (or function) of the selected display device through the common control command that corresponds to the user input key signal. Specifically, in order to identify (or designate) the display device to be operated among the plurality of display devices, the integrated display input device 100 maps and stores the device identification codes that correspond to the specific key signals for the plurality of display devices, and if the specific key signal is input in accordance with the user's key operation, the integrated display input device 100 selects and designates one of the display devices to be operated through the device identification code that corresponds to the input specified key signal. Further, in order to control the operation (or function) of the display devices, the integrated display input device 100 maps and stores the common control commands (e.g., a power on/off command, an image display command, and the like) for the different specific key signals in the memory, and if one of the display devices to be operated is selected as described above, the integrated display input device 100 controls the specific operation (or function) of the display device in accordance with the command control command. That is, the integrated display input device 100 controls the operation (or function) of the display device selected and designated through the specific command control command that corresponds to the user input key signal,

The plurality of display devices 201-1 to 201-4 monitor the values, i.e., the device identification codes, which are transmitted through wire/wireless communications, and if the same device identification code as their own device identification code is recognized, only the corresponding display device is operated, but the remaining display devices are processed by default. After the recognition, the detailed operation is performed in accordance with the common control command that is transmitted from the integrated display control unit. In addition, each of the plurality of display devices 201-1 to 201-4 may be configured to further include means for allowing the display device having the corresponding function to acquire a control right prior to the integrated display input device when a predetermined communication message or a specific function is operated.

Hereinafter, the configuration of the integrated display input device that is used in the integrated display control system of Fig. 1 according to the present invention will be described in more detail with reference to Fig. 2.

Fig. 2 is a block diagram illustrating an integrated display input device according to the present invention.

As illustrated in Fig. 2, the integrated display input device 100 is configured to include a key input unit 101, a memory 102, a device identification control unit 103, a device operation control unit 104, and a communication module 105.

That is, the integrated display input device 100 is configured to include the key input unit 101; the memory 102 mapping and storing the device identification codes that correspond to the specific key signals for the plurality of display devices, and mapping and storing the common control commands for the different specific key signals; the device identification control unit 103 reading the device identification code that corresponds to the input specific key signal from the memory 102 when the specific key signal is input from the key input unit 101, and selecting and designating one of the display devices to be operated; the device operation control unit 104 controlling the specific operation (or function) of the display device selected and designated through reading the common control command that corresponds to the specific key signal input through the key input unit 101 from the memory 103; and the communication module 105 transmitting the read device identification code and the common control command to the plurality of display devices connected thereto by wire or wirelessly.

Hereinafter, the operation of the integrated display control system according to the present invention will be described using the integrated display input device having the configuration of Fig. 2.

First, in order to identify (or designate) the display device to be operated among the plurality of display devices, the device identification codes (e.g., 0001, 0010, 0011, and so on), which correspond to the specific key signals for the plurality of display devices, are mapped and the resultant values are stored in the memory 102.

Then, in order to control the operation (or function) of the display device, the common control commands (e.g., a power on/off command, an image display command, and the like) for the different specific key signals are mapped, and the resultant values are stored in the memory 102.

In this state, if the specific key signal is input through the key input unit 101 in accordance with the user's key operation, the device identification control unit 103 reads the device identification code that corresponds to the input specific key signal from the memory 102, and selects and designates one of the display devices to be operated.

Thereafter, in order to control the specific operation (or function) of the display device selected and designated, the device operation control unit 104 reads the common control command that corresponds to the specific key signal input through the key input unit 101 from the memory 102, and transfers the common control command to the communication module 105 together with the device identification code read from the memory 102.

Then, the communication module 105 is enabled to transmit the read device identification code and the common control command to the plurality of display devices 201-1 to 201-4 which are connected by wire or wirelessly.

The plurality of display devices 201-1 to 201-4 monitor the values, i.e., the device identification codes, which are transmitted through wire/wireless communication, and if the same device identification code as their own device identification code is recognized, only the corresponding display device is operated, but the remaining display devices are processed by default.

After the recognition, the detailed operation is performed in accordance with the common control command that is transmitted from the integrated display control unit.

As described above, according to the present invention, the plurality of display devices can be individually and integratedly controlled through one input device by selecting and designating one of the display devices to be operated using the device identification codes that respectively correspond to the specific key signals input in accordance with the user's key operation, and controlling the specific operation (or function) of the display device selected and designated using the common control commands that respectively correspond to the user input key signals.

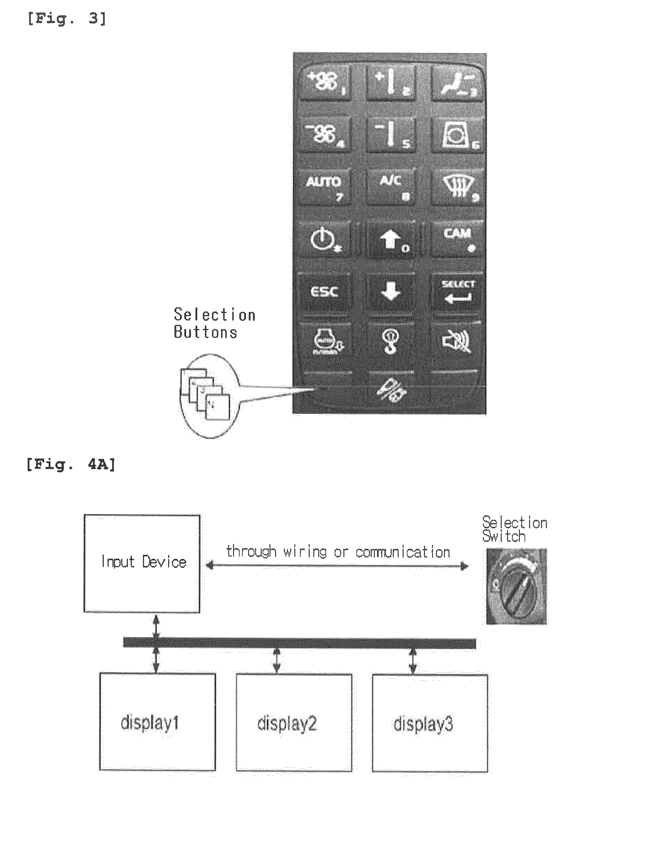

Fig. 3 is an exemplary view of an integrated display input device according to the present invention. As illustrated in Fig. 3, the respective display devices can be selected using selection buttons of one integrated input device or a selection switch. In this case, the selection buttons and the selection switch should be connected to the respective display devices by wire or wirelessly.

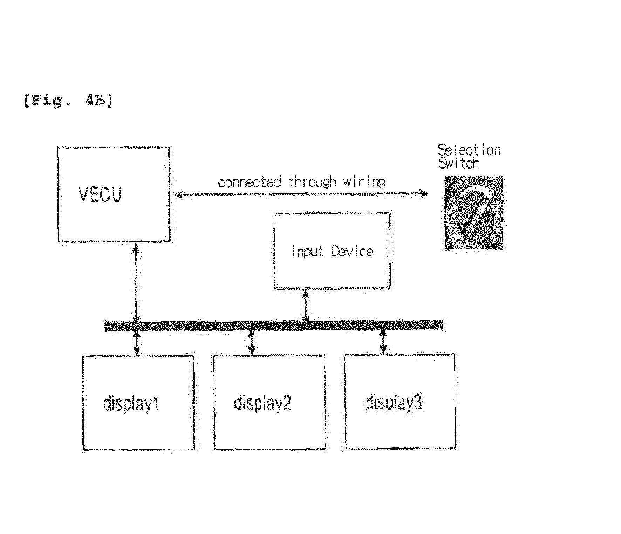

Figs. 4A and 4B are views illustrating another example of the integrated display control system according to the present invention. According to the present invention, as illustrated in Fig. 4A, one input device may receive a signal of the selection switch and control the selected display device through communications. Further, as illustrated in Fig. 4B, VECU may receive a signal of the selection switch, and transmit information on which is the currently selected display device (e.g., display 1) to the respective display devices through communications. Accordingly, only the device that corresponds to the number can be operated through recognition of the signal of the input device.

### INDUSTRIAL APPLICABILITY

The present invention can be used in the integrated display control system and the integrated display input device, and more particularly, the present invention can be used in the integrated display control system and the integrated display input device, which can individually and integratedly control the plurality of display devices through one input device by selecting and designating one of the display devices to be operated using the device identification codes that respectively correspond to the specific key signals input in accordance with the user's key operation, and controlling the specific operation (or function) of the display device selected and designated using the common control commands that respectively correspond to the user input key signals.

## Claims

1. An integrated display control system comprising:
a plurality of display devices; and
an integrated display input device selecting one of the display devices to be operated through device identification codes that respectively correspond to specific key signals input in accordance with user's key operation and controlling the operation (or function) of the selected display device through common control commands that respectively correspond to the user input key signals.

2. The integrated display control system according to claim 1, wherein the integrated display input device comprises:
a key input unit;
a memory mapping and storing the device identification codes that correspond to the specific key signals for the plurality of display devices, and mapping and storing the common control commands for the different specific key signals;
a device identification control unit reading the device identification code that corresponds to the input specific key signal from the memory when the specific key signal is input from the key input unit, and selecting and designating one of the display devices to be operated;
a device operation control unit controlling the specific operation (or function) of the display device selected and designated through reading the common control command that corresponds to the specific key signal input through the key input unit from the memory; and
a communication module transmitting the read device identification code and the common control command to the plurality of display devices connected thereto by wire or wirelessly.

3. The integrated display control system according to claim 1, wherein each of the plurality of display devices further comprises means for allowing the display device having a corresponding function to acquire a control right prior to the integrated display input device when a predetermined communication message or a specific function is operated.

4. An integrated display input device comprising:
a key input unit;
a memory mapping and storing device identification codes that correspond to specific key signals for a plurality of display devices, and mapping and storing common control commands for the different specific key signals;
a device identification control unit reading the device identification code that corresponds to the input specific key signal from the memory when the specific key signal is input from the key input unit, and selecting and designating one of the display devices to be operated;
a device operation control unit controlling the specific operation (or function) of the display device selected and designated through reading the common control command that corresponds to the specific key signal input through the key input unit from the memory; and
a communication module transmitting the read device identification code and the common control command to the plurality of display devices connected thereto by wire or wirelessly.
